(19) Europäisches Patentamt

European Patent Office

Office européen des brevets

(11) **EP 1 276 964 B1**

(12) **EUROPEAN PATENT SPECIFICATION**

(45) Date of publication and mention
of the grant of the patent:
**15.09.2004 Bulletin 2004/38**

(51) Int Cl.⁷: **E21B 43/24**, E21B 43/30

(86) International application number:
**PCT/EP2001/004645**

(21) Application number: **01933879.7**

(22) Date of filing: **24.04.2001**

(87) International publication number:
**WO 2001/083945 (08.11.2001 Gazette 2001/45)**

(54) **A METHOD FOR TREATING A HYDROCARBON CONTAINING FORMATION**

VERFAHREN ZUR BEHANDLUNG VON ERDÖLLAGERSTÄTTEN

PROCEDE DE TRAITEMENT D'UNE FORMATION RENFERMANT DES HYDROCARBURES

(84) Designated Contracting States:
**AT BE CH CY DE DK ES FI FR GB GR IE IT LI LU MC NL PT SE TR**

(30) Priority: **24.04.2000 US 199214 P**

(43) Date of publication of application:
**22.01.2003 Bulletin 2003/04**

(73) Proprietor: **SHELL INTERNATIONALE RESEARCH MAATSCHAPPIJ B.V.**
**2596 HR Den Haag (NL)**

(72) Inventors:
• **WELLINGTON, Scott, Lee**
**Bellaire, TX 77401 (US)**
• **VINEGAR, Harold, J.**
**Houston, TX 77096 (US)**
• **DE ROUFFIGNAC, Eric**
**Houston, TX 77005 (US)**
• **BERCHENKO, Ilya, Emil**
**Friendswood, TX 77546 (US)**
• **STEGEMEIER, George, Leo**
**Houston, TX 77096 (US)**
• **KARANIKAS, John, Michael**
**Houston, TX 77027 (US)**

(56) References cited:
**US-A- 2 914 309          US-A- 3 999 607**
**US-A- 4 637 464**

**Description**

The invention relates to a method for treating a hydrocarbon containing formation in-situ and producing a hydrocarbon fluid from the formation, by pyrolysing hydrocarbons present in the formation.

Hydrocarbons obtained from subterranean formations are often used as energy resources, as feedstocks, and as consumer products. Concerns over depletion of available hydrocarbon resources have led to development of processes for more efficient recovery, processing and use of available hydrocarbon resources. In-situ processes may be used to remove hydrocarbon materials from subterranean formations. Chemical and/or physical properties of hydrocarbon material within a subterranean formation may need to be changed to allow hydrocarbon material to be more easily removed from the subterranean formation. The chemical and physical changes may include in-situ reactions that produce removable fluids, solubility changes, phase changes, and/or viscosity changes of the hydrocarbon material within the formation. A fluid may be, but is not limited to, a gas, a liquid, an emulsion, a slurry and/or a stream of solid particles that has flow characteristics similar to liquid flow.

Examples of in-situ processes utilizing downhole heaters are illustrated in US-A-2634961, US-A-2732195, US-A-2780450, US-A-2789805, US-A-2923535 and US-A-4886118.

For example, the application of heat to oil shale formations is described in US-A-2923535 and US-A-4886118. Herein, heat is applied to the oil shale formation to pyrolyse kerogen within the oil shale formation. The heat also fractures the formation to increase permeability of the formation. The increased permeability allows hydrocarbon fluids to travel to a production well where the fluid is removed from the oil shale formation. In US-A-2923535 pressure was applied by closing all gas outlet valves for the purpose of testing the formation's porosity and permeability for gases and vapours. US-A-2923535 is silent about maintaining an increased pressure during the production of gases and vapours.

There has been a significant amount of effort to develop methods and systems to economically produce hydrocarbons, hydrogen, and/or other products from hydrocarbon containing formations. At present, however, there are still many hydrocarbon containing formations from which hydrocarbons, hydrogen, and/or other products cannot be economically produced. Thus there is still a need for improved methods and systems for production of hydrocarbons, hydrogen, and/or other products from various hydrocarbon containing formations.

US-A-5236039 discloses a method for the in-situ treatment of a hydrocarbon containing formation, using radio frequency heating sources for heating the formation to pyrolysis temperature. In this document there is no generic teaching with respect to the influence of pressure on the method or its results.

US-A-3999607 discloses a process for recovering liquid hydrocarbons from an underground coal deposit wherein a cavity is formed by burning out coal and coal above the cavity is rubblized, whereupon a flamefront is established in the rubblized zone and liquids and gases are withdrawn from the rubblized zone.

It has now been found that by applying during pyrolysis a hydrogen partial pressure at a moderate level, usually below 50 bar, the hydrocarbon fluid produced from the formation is improved in quality. In particular the presence of hydrogen at a moderate partial pressure increases the API gravity. Further, it reduces the production of long chain hydrocarbon fluids, olefins and poly-aromatic compounds, and it reduces the formation of tars and other difficult to upgrade, crosslinked products.

In view of the prior art, this is an unexpected result. For example US-A-2595979 teaches the application of a hydrogen partial pressure above 1000 psi (about 70 bar), up to 10000 psi (about 700 bar) and moreover that structural limitations usually require the use of pressures in the lower portion of this range, and that higher pressures are desirable whenever practicable.

Accordingly the method according to the invention comprises pyrolysing hydrocarbons in the formation in the presence of hydrogen at a hydrogen partial pressure of at least 0.1 bar and at most 50 bar.

Suitably, the quantity, the composition and the quality of the hydrocarbon fluid produced in the pyrolysis may be controlled by controlling the pressure in relation to the applied temperature and vice versa. In this respect the quantity, the composition and the quality of the hydrocarbon fluids may be defined by one or more relevant properties, such as API gravity, olefin to paraffin ratio, elemental carbon to hydrogen ratio, equivalent liquids produced (gas and liquid), liquids produced, percent of Fischer Assay and the presence of hydrocarbons with carbon numbers greater than 25 within the hydrocarbon fluids. The pressure for a selected temperature, or the temperature for a selected pressure, which may yield hydrocarbon fluids having the relevant property may be determined using an equation, i.e. "equation 1" hereinafter, of the form:

$$P = 0.07 * e^{\frac{-A}{T+273}+B}$$

wherein P is the pressure (bar absolute), T is the temperature (°C), and A and B are parameters which relate to the relevant property and which can be determined by experiment. The parameter A may have any value in the range from 14000 up to 60000 and the parameter B may have any value in the range from 25 to 90. The dimensions of the factor 0.07 and the parameters A and B are such as to comply with the dimensions of P and T.

In many cases, the application of the temperature/pressure control will involve to the application of an increased pressure during the pyrolysis. It has appeared that the application of an increased pressure has a number of unexpected advantages. These advantages apply independently of the application of the present temperature/pressure control.

An increased pressure in the formation results in the production of improved hydrocarbon fluids. As pressure within the formation is increased, hydrocarbon fluids produced from the formation include a larger portion of non-condensable components. In this manner, a significant amount (e.g., a majority) of the hydrocarbon fluids produced at such a pressure includes a lighter and higher quality condensable component than hydrocarbon fluids produced at a lower pressure.

Maintaining an increased pressure within the heated formation has been found to substantially inhibit production of hydrocarbon fluids having carbon numbers greater than, for example, about 25 and/or multi-ring hydrocarbon compounds. It also appeared that maintaining an increased pressure within the heated formation results in an increase in API gravity of hydrocarbon fluids produced from the formation. Thus, higher pressures may increase production of relatively short chain hydrocarbon fluids, which may have higher API gravity values.

Further, maintaining an increased pressure within the formation inhibits formation subsidence. Maintaining an increased pressure within the formation also tends to reduce the required sizes of collection conduits which are used to transport condensable components. Maintaining an increased pressure within the formation may also facilitate generation of electricity from produced non-condensable fluid. For example, the produced non-condensable fluid may be passed through a turbine to generate electricity.

The invention also provides a method for producing synthesis gas which method comprises providing a hydrocarbon containing formation which is treated according to this invention and reacting the hydrocarbon containing formation with a synthesis gas generating fluid.

The invention also provides a method for producing hydrocarbons comprising providing a synthesis gas which synthesis gas has been produced according to this invention and converting the synthesis gas into hydrocarbons.

The invention also provides a method of producing energy comprising providing a synthesis gas which synthesis gas has been produced according to this invention and expanding and/or combusting the synthesis gas.

Unless indicated otherwise, the term "pressure" is herein deemed to refer to absolute pressure. The temperature T and pressure P prevailing during the production of hydrocarbon fluid from the formation or during synthesis gas generation is deemed to be measured in a production well, in the direct proximity of the relevant portion of the formation where pyrolysis or synthesis gas production takes place. Alternatively, the temperature T may be assessed on the basis of the heat input generated by the heater wells and the heat generated or consumed by the pyrolysis reaction and the properties of the formation.

Preferably the hydrocarbon containing formation for use in this invention contains kerogen. Kerogen is composed of organic matter which has been transformed due to a maturation process. Hydrocarbon containing formations which include kerogen are for example coal containing formations and oil shale containing formations. Alternatively, hydrocarbon containing formations may be treated which do not include kerogen, for example, formations containing heavy hydrocarbons (e.g., tar sands).

Hydrocarbon containing formations may be selected for in-situ treatment based on properties of at least a portion of the formation such that it leads to the production of high quality fluids from the formation. For example, hydrocarbon containing formations which include kerogen may be assessed or selected for treatment based on the vitrinite reflectance of the kerogen. Vitrinite reflectance is often related to the elemental hydrogen to carbon ratio of a kerogen and the elemental oxygen to carbon ratio of the kerogen. Preferably the vitrinite reflectance is in the range of from 0.2% to 3.0%, more preferably from 0.5% to 2.0%. Such ranges of vitrinite reflectance tend to indicate that relatively higher quality hydrocarbon fluids will be produced from the formation.

The hydrocarbon containing formation may be selected for treatment based on the elemental hydrogen content of the hydrocarbon containing formation. For example, a method of treating a hydrocarbon containing formation may typically include selecting a hydrocarbon containing formation for treatment having an elemental hydrogen content greater than 2 weight%, in particular greater than 3 weight%, or more in particular greater than 4 weight% when measured on a dry, ash-free basis. Preferably, the hydrocarbon containing formation has an elemental hydrogen to carbon ratio in the range of from 0.5 to 2, in particular from 0.70 to 1.7. The elemental hydrogen content may significantly affect the composition of hydrocarbon fluids produced, for example through the formation of molecular hydrogen.

Thus, if too little hydrogen is present in the formation, then the amount and quality of the produced fluids will be negatively affected. It is advantageous to maintain a hydrogen partial pressure and if too little hydrogen is naturally present, then hydrogen or other reducing fluids may be added to the formation.

The formation may typically have an elemental oxygen weight percentage of less than 20%, in particular less than 15%, and more in particular less than 10% when measured on a dry, ash-free basis. Typically, the elemental oxygen to carbon ratio is less than 0.15. In this manner, production of carbon dioxide and other oxides from an in situ conversion process of hydrocarbon containing material may be reduced. Frequently, the elemental oxygen to carbon ratio is in the range of from 0.03 to 0.12.

Heating the hydrocarbon containing formation generally includes providing a large amount of energy to heat sources located within the formation. Hydrocarbon containing formations may contain water. Water present in the hydrocarbon containing formation will tend to further increase the amount of energy required to heat the hydrocarbon containing formation, because a large amount of energy may be required to evaporate water from the formation. Therefore, excessive amounts of heat and/or time may be required to heat a formation having a high moisture content. Preferably, the water content of the hydrocarbon containing formation is less than 15 weight%, more preferably less than 10 weight%.

The hydrocarbon containing formation or the portion thereof which is subjected to pyrolysis may have a width of for example at least 0.5 m, or at least 1.5 m, or at least 2.4 m, or even at least 3.0 m. The width may be up to 100 m, or up to 1000 m, or even up to 2000 m, or more. The hydrocarbon containing formation or the portion thereof which is subjected to pyrolysis may have a layer thickness of, for example, at least 2 m, more typically in the range of from 4 m to 100 m, more typically from 6 m to 60 m. The overburden of the hydrocarbon containing formation may have a thickness of, for example, at least 10 m, more typically in the range of from 20 m to 800 m or to 1000 m or more.

The hydrocarbon containing formation may be heated according to methods known in the art to a temperature sufficient for pyrolysis of hydrocarbons present in the formation, by using one or more heat sources placed in heater wells.

The heater wells are positioned in the proximity of, or preferably within the hydrocarbon containing formation. Preferably a plurality of heat sources is employed so that a large portion of a hydrocarbon containing formation may be heated, and preferably such that superposition (overlapping) of heat produced from the heat sources occurs. Superposition of heat may decrease the time necessary to reach pyrolysis temperatures. Superposition of heat may allow for a relatively large spacing between adjacent heat sources, which may in turn provide a relatively slow rate of heating of the hydrocarbon containing formation. Superposition of heat will also provide uniform heating so that temperatures can be controlled to generate fluids with desireable properties throughout a large part of the heated portions of the hydrocarbon containing formation.

The spacing between heat sources may typically be within the range of from 5 m to 20 m, preferably from 8 m to 12 m. Positioning of equidistant heat sources, in a triangular pattern, is preferred as it tends to provide more uniform heating to the formation in comparison to other patterns such as hexagons. In addition, a triangular pattern tends to provide faster heating to a predetermined temperature in comparison to other patterns such as hexagons.

Any conventional heat source may be applied. It is preferred to apply heat sources which are suitable for conductive heating, for example any kind of electrical heater or any kind of combustion heater. Less preferred are heat sources which apply radio frequency heating.

Because permeability and/or porosity are relatively quickly increased in the heated formation, produced vapours may flow considerable distances through the formation with relatively little pressure differential. Increases in permeability result from a reduction of mass of the heated portion due to evaporation of water, removal of hydrocarbons, and/or creation of fractures. For the recovery of the hydrocarbon fluids, production wells may be provided, preferably near the upper surface of the formation. Fluid generated within the hydrocarbon containing formation may move a considerable distance through the hydrocarbon containing formation as a vapour. Such a considerable distance may include, for example, 50 m to 1000 m. The vapour may have a relatively small pressure drop across the considerable distance due to the permeability of the heated portion of the formation. Due to such permeability, a production well may only need to be provided in every other unit of heat sources or every third, fourth, fifth, sixth units of heat sources, which each may comprise a plurality of heater wells, for example two, three or six. The production wells may be cased wells which may have a production screen or perforated casings. In addition, the production wells may be surrounded by sand or gravel to minimize the pressure drop of fluids entering the casing.

In addition, water pumping wells or vacuum wells may be configured to remove liquid water from the hydrocarbon containing formation. For example, a plurality of water wells may surround all or the portion of the formation to be heated.

The hydrocarbon fluid produced is a material which contains carbon and hydrogen in its molecular structure. It may also include other elements, such as halogens, metallic elements, nitrogen, oxygen and sulfur.

The hydrocarbon containing formation is heated to a temperature at which pyrolysis can take place. The pyrolysis temperature range may include temperatures up to, for example, 900 °C. A majority of hydrocarbon fluids may be produced within a pyrolysis temperature range of from 250 °C to 400 °C, more preferably in the range of from 260 °C to 375 °C. A temperature sufficient to pyrolyse heavy hydrocarbons in a hydrocarbon containing formation of relatively low permeability may be within a range from 270 °C to 300 °C. In other embodiments, a temperature sufficient to pyrolyse heavy hydrocarbons may be within a range from 300 °C to 375 °C. If a hydrocarbon containing formation is heated throughout the entire pyrolysis temperature range, the formation may produce only small amounts of hydrogen towards the upper limit of the pyrolysis temperature range. After the available hydrogen is depleted, little hydrocarbon production from the formation may occur.

Preferably, the hydrocarbon containing formation or the portions thereof designated for pyrolysis is heated at a low heating rate. In general the heating rate will be at most 50 °C/day. Typically, the heating rate is less than 10 °C/day, more typically less than 3 °C/day, in particular less than 0.7 °C/day. Frequently the rate of heating will be more than 0.01 °C/day, in particular more than 0.1 °C/day. In particular, such low heating rates are applied in the pyrolysis temperature range. More in particular, heated portions of the hydrocarbon containing formation may be heated at such a rate for a time greater than 50% of the time needed to span the pyrolysis temperature range, preferably more than 75% of the time needed to span the pyrolysis temperature range, or more preferably more than 90% of the time needed to span the pyrolysis temperature range.

The rate at which a hydrocarbon containing formation is heated may affect the quantity and quality of the hydrocarbon fluids produced from the hydrocarbon containing formation. For example, heating at high heating rates may produce a larger quantity of fluids from a hydrocarbon containing formation. The products of such a process, however, may be of a significantly lower quality than when heating using lower heating rates. Further, controlling the heating rate at less than 3 °C/day generally provides better control of the temperature within the hydrocarbon containing formation.

The present teachings as regards heating rates are applicable independent of the application of the temperature/pressure control of this invention.

Heating of a hydrocarbon containing formation to the pyrolysis temperature range may occur before substantial permeability has been generated within the hydrocarbon containing formation. An initial lack of permeability may prevent the transport of generated fluids from a pyrolysis zone within the formation. In this manner, as heat is initially transferred from the heat source to the hydrocarbon containing formation, the fluid pressure within the hydrocarbon containing formation may increase proximate to the heat source.

The pressure generated by expansion of the hydrocarbon fluids or other fluids generated in the formation may initially increase as an open path to the production well or any other pressure sink may not yet exist in the formation. In addition, the fluid pressure may exceed the lithostatic pressure, so that fractures in the hydrocarbon containing formation may form from the heat sources to the production wells. The generation of fractures within the heated portion then reduces the pressure, due to the production of hydrocarbon fluids through the production wells.

To maintain pressure within the carbon containing formation during the production of hydrocarbon fluids, a back pressure may be maintained at the production well. The pressure may be controlled by means of valves and/or by injecting gases into the hydrocarbon containing formation, for example hydrogen, carbon dioxide, carbon monoxide, nitrogen or methane, or water or steam. Injecting hydrogen is particularly preferred.

Valves may be configured to maintain, alter, and/or control the pressure within the hydrocarbon containing formation. For example, heat sources disposed within the hydrocarbon containing formation may be coupled to a valve. The valve may be configured to release fluid from the formation through the heat source or for the injection of a gas into the hydrocarbon containing formation. Alternatively, a pressure valve may be coupled to the production wells. Fluids released by the valves may be collected and transported to a surface unit for further processing and/or treatment.

In accordance with this invention the pressure and the temperature are controlled during pyrolysis and during the production of the pyrolysed hydrocarbon fluid from the formation, in order to achieve control of certain properties which are relevant to the quantity, the composition and the quality of the hydrocarbon fluids. The value of the parameters A and B in equation 1 can determined by experiment. Generally, values of the parameter A may be any value in the range of from 14000 up to 60000 and values of the parameter B may be any value in the range of from 25 up to 90. Some examples are given hereinafter.

To produce a hydrocarbon fluid having a low content of hydrocarbons having a carbon number of 25 or more, for example less than 25 weight %, it is preferred that the pressure is at least the pressure which can be calculated for a selected temperature, or the temperature is at most the temperature which can be calculated for a selected pressure from equation 1 wherein A equals 14206 and B equals 25.123, more preferably A equals 15972 and B equals 28.442, in particular A equals 17912 and B equals 31.804, more in particular A equals 19929 and B equals 35.349, most in particular A equals 21956 and B equals 38.849. In practice it may frequently be sufficient that the pressure is at most the pressure which can be calculated for a selected temperature, or the temperature is at least the temperature which can be calculated for a selected pressure from equation 1 wherein A equals 24146 and B equals 43.349.

For producing a hydrocarbon fluid of which the condensable hydrocarbons have a high API gravity, for example at least 30°, it is preferred that the pressure is at least the pressure which can be calculated for a selected temperature, or the temperature is at most the temperature which can be calculated for a selected pressure from equation 1 wherein A equals 30864 and B equals 50.676, more preferably A equals 21719 and B equals 37.821, in particular A equals 16895 and B equals 31.170. In practice it may frequently be sufficient that the pressure is at most the pressure which can be calculated for a selected temperature, or the temperature is at least the temperature which can be calculated for a selected pressure from equation 1 wherein A equals 16947 and B equals 33.603. As used herein, "condensable hydrocarbons" are hydrocarbons which have a boiling point of at least 25 °C at 1 bar.

For producing a hydrocarbon fluid having a low ethylene/ethane ratio, for example at most 0.1, it is preferred that the pressure is at least the pressure which can be calculated for a selected temperature, or the temperature is at most the temperature which can be calculated for a selected pressure from equation 1 wherein A equals 57379 and B equals 83.145, more preferably A equals 16056 and B equals 27.652.

For producing a hydrocarbon fluid of which the condensable hydrocarbons have a high elemental hydrogen to carbon ratio, for example at least 1.7, it is preferred that the pressure is at least the pressure which can be calculated for a selected temperature, or the temperature is at most the temperature which can be calculated for a selected pressure from equation 1 wherein A equals 38360 and B equals 60.531.

The total potential amount of hydrocarbon fluids which may be produced from the hydrocarbon containing material may be determined by the Fischer Assay. The Fischer Assay is a standard method which involves heating a sample of hydrocarbon containing material to approximately 500 °C, collecting products produced from the heated sample, and quantifying the products. For producing a high quantity of hydrocarbon fluid from the hydrocarbon containing formation, for example at least 60 % of the value indicated by the Fischer Assay, it is preferred that the pressure is at most the pressure which can be calculated for a selected temperature, or the temperature is at least the temperature which can be calculated for a selected pressure to apply a pressure which is at most the pressure (or to apply a temperature which is at least the temperature) which can be calculated from equation 1 wherein A equals 20543 and B equals 36.191. In practice it may frequently be sufficient that the pressure is at least the pressure which can be calculated for a selected temperature, or the temperature is at most the temperature which can be calculated for a selected pressure from equation 1 wherein A equals 28554 and B equals 47.084.

In certain instances it may be most advantageous to control the pressure and temperature such that they belong to values of A and B which represent conditions of relatively low levels of preference as indicated hereinbefore. This may be the case, for example, when a certain combination of product quantity, composition and quality is desired. Thus, the above disclosure includes also all possible sub-ranges which may be defined by combining sets of A and B as disclosed. In particular, it may be advantageous during the production of the hydrocarbon fluid to keep a relevant property constant, which may be achieved by operating under a constant value of the parameters A and B. During the pyrolysis and during the production of the hydrocarbon fluid from the formation the pressure may be selected within wide ranges. Typically, a pressure of at least 1.5 bar is applied, more typically at least 1.6 bar, in particular at least 1.8 bar. Frequently, when the pyrolysis temperature is at least 300 °C, a pressure of at least 1.6 bar may be applied, and below 300 °C, a pressure of at least 1.8 bar may be applied. The upper limit of the pressure may be determined by the strength and the weight of the overburden. Frequently, under practical conditions, the pressure is less than 70 bar, more frequently less than 60 bar or even less than 50 bar. The pressure may advantageously be controlled within a range of from 2 bar to 18 bar or 20 bar, or alternatively within a range of from 20 bar to 36 bar.

In accordance with the invention a partial pressure of hydrogen is maintained. Typically the partial pressure is at least 0.2 and at least 0.4 bar, and up to 35 or even 50 bar, more typically in the range of from 1 bar to 10 bar, in particular in the range of from 5 bar to 7 bar. Maintaining a hydrogen partial pressure within the formation in particular increases the API gravity of produced hydrocarbon fluids and reduces the production of long chain hydrocarbon fluids.

The present teachings as regards the partial pressure of hydrogen are applicable independent of the application of the temperature/pressure control of this invention.

At least 20%, typically at least 25%, preferably at least 35% of the initial total organic carbon content of the hydrocarbon containing formation, or the portion thereof subjected to pyrolysis may be transformed into hydrocarbon fluids. In practice frequently at most 90% of the total organic carbon content of the hydrocarbon containing formation, or the portion thereof which is subjected to pyrolysis, may be transformed into hydrocarbon fluids, more frequently this may be at most 80%, or at most 70% or at most 60%.

In certain embodiments, after the pyrolysis, synthesis gas may be produced from hydrocarbons remaining within the hydrocarbon containing formation. The pyrolysis may produce a relatively high, substantially uniform permeability throughout the hydrocarbon containing formation or the pyrolysed portion thereof. Such a relatively high, substantially uniform permeability allows the generation of synthesis gas without production of significant amounts of hydrocarbon fluids in the synthesis gas. The portion also has a large surface area and/or a large surface area/volume. The large surface area may allow synthesis gas producing reactions to be substantially at equilibrium conditions during synthesis gas generation. The relatively high, substantially uniform permeability can result in a relatively high recovery efficiency of synthesis gas, as compared to synthesis gas generation in a hydrocarbon containing formation which has not been subjected to pyrolysis. This teaching is applicable independent of the application of the temperature/pressure control of this invention.

Pyrolysis of at least some hydrocarbon containing material may in some embodiments convert 20% of carbon initially available. Synthesis gas generation may convert at least an additional 10% and typically up to an additional 70% of the carbon initially available. In this manner, in-situ production of synthesis gas from a hydrocarbon containing formation may allow conversion of larger amounts of carbon initially available within the portion.

Synthesis gas may be produced from the formation prior to or subsequent to producing the hydrocarbon fluid from the formation. The synthesis gas, although generally defined as a mixture of hydrogen ($_{H2}$) and carbon monoxide (CO), may comprise additional components such as water, carbon dioxide ($CO_2$), methane and other gases.

The synthesis gas generation may be commenced before and/or after hydrocarbon fluid production decreases to an uneconomical level. In this manner, heat provided to pyrolyse may also be used to generate synthesis gas. For example, if a portion of the formation is 375 °C after pyrolysation, then less additional heat is generally required to heat such portion to a temperature sufficient to support synthesis gas generation. In certain instances heat may be provided from one or more heat sources to heat the formation to a temperature sufficient to allow synthesis gas generation (for example in the range of from 400 °C to 1200 °C or higher). At the upper end of the temperature range, the generated synthesis gas may include mostly $H_2$ and CO, in for example a 1:1 mole ratio. At the lower end of this temperature range, the generated synthesis gas may have a higher $H_2$ to CO ratio.

Heating wells, heating sources and production wells within the formation for pyrolysing and producing hydrocarbon fluids from the formation may be utilized during synthesis gas production as an injection well to introduce synthesis gas producing fluid, as a production well, or as a heat source to heat the formation. Heat sources for the synthesis gas production may include any of the heat sources as disclosed hereinbefore. Alternatively, heating may include transferring heat from a heat transfer fluid, for example steam or combustion products from a burner, flowing within a plurality of wellbores within the formation.

A synthesis gas generating fluid, for example liquid water, steam, carbon dioxide, air, oxygen, hydrocarbons, and mixtures thereof, may be provided to the formation. For example, the synthesis gas generating fluid mixture may include steam and oxygen. The synthesis gas generating fluid may include aqueous fluid produced by pyrolysis of hydrocarbon containing material within another portion of the formation. Providing the synthesis gas generating fluid may alternatively include raising a water table of the formation to allow water to flow into it. Synthesis gas generating fluid may also be provided through an injection wellbore. The synthesis gas generating fluid will generally react with carbon in the formation to form $H_2$, water (as liquid or as steam), $CO_2$, and/or CO.

Carbon dioxide may be separated from the synthesis gas and may be re-injected into the formation with the synthesis gas generating fluid. By a shift of the prevailing chemical equilibrium reactions, carbon dioxide added to the synthesis gas generating fluid may substantially inhibit further production of carbon dioxide during the synthesis gas generation. The carbon dioxide may also react with carbon in the formation to generate carbon monoxide.

Hydrocarbons such as ethane may be added to the synthesis gas generating fluid. When introduced into the formation, the hydrocarbons may crack to form hydrogen and/or methane. The presence of methane in the produced synthesis gas may increase its heating value.

Synthesis gas generating reactions are typically endothermic reactions. Heat may be added to the formation during synthesis gas production to keep the formation temperature at the desired level. Heat may be added from heat sources and/or from introducing synthesis gas generating fluid which has a higher temperature than the temperature of the formation. As an alternative, an oxidant may be added to the synthesis gas generating fluid, for example air, oxygen enriched air, oxygen, hydrogen peroxide, other oxidizing fluids, or combinations thereof. The oxidant may react with carbon within the formation to generate heat, and to result in production of $CO_2$ and/or CO. In a preferred embodiment oxygen and water (or steam) are provided to the formation, for example in a mole ratio of from 1:2 to 1:10, preferably from 1:3 to 1:7, for example 1:4.

The hydrocarbon containing formation may be maintained at a relatively high pressure during synthesis gas production. Synthesis gas may be generated in a wide pressure range, for example between 1 bar and 100 bar, more typically between 2 bar and 80 bar, especially between 5 bar and 60 bar. High operating pressures may result in an increased production of $H_2$. High operating pressures may allow generation of electricity by passing produced synthesis gas through a turbine, and they may allow for smaller collection conduits to transport produced synthesis gas.

The synthesis gas may be generated in a wide temperature range, such as between 400 °C and 1200 °C, more typically between 600 °C and 1000 °C. At a relatively low synthesis gas generation temperature a synthesis gas may be produced which has a high $H_2$ to CO ratio. A relatively high formation temperature may produce a synthesis gas having a $H_2$ to CO ratio that approaches 1, and the stream may include mostly (and in some cases substantially only) $H_2$ and CO. At a formation temperature of about 700 °C, the formation may produce a synthesis gas having a $H_2$ to CO ratio of 2. Typically synthesis gas may be generated which has a $H_2$ to CO mole ratio in the range of from 1:4 to 8:1, more typically in the range of from 1:2 to 4:1, in particular in the range of from 1:1 to 2.5:1. Certain embodiments may include blending a first synthesis gas with a second synthesis gas to produce synthesis gas of a desired composition. The first and the second synthesis gases may be produced from different portions of the formation.

The hydrocarbon containing formation or the portion thereof which has been subjected to pyrolysation and optionally to synthesis gas generation may be allowed to cool or may be cooled to form a cooled, spent formation.

After production of hydrocarbon fluids and/or synthesis gas, a fluid (e.g., carbon dioxide) may be sequestered within the formation. To store a significant amount of fluid within the formation, the temperature of the formation will often need to be less than 100 °C, for example down to 20 °C. Water may be introduced into the formation to generate steam and reduce the temperature of the formation. The steam may be removed from the formation. The steam may be utilized for various purposes, for example for heating another portion of the formation, for generating synthesis gas in an adjacent portion of the formation, or as a steam flood in an oil reservoir. After the formation is cooled, fluid may be pressurized and sequestered in the formation. Sequestering fluid within the formation may result in a significant reduction or elimination of fluid that is released to the environment due to operation of the present in-situ process. The spent formation is especially useful for this purpose, because it has a structure of high porosity and high permeability for fluids, in particular gases.

The fluid to be sequestered may be injected under pressure, for example in the range of from 5 bar to 50 bar, into the cooled, spent formation and adsorbed onto hydrocarbon containing material in the formation. Subsequent addition of water to the formation may inhibit desorption of the carbon dioxide. An example of a method for sequestering carbon dioxide is illustrated in US-A-5566756.

The synthesis gases described herein may be converted to hydrocarbons, which include methanol, or to other products, such as ammonia. For example, a Fischer-Tropsch hydrocarbon synthesis process may be configured to convert synthesis gas to paraffins. The synthesis gas may also be used in a catalytic methanation process to produce methane. Alternatively, the synthesis gas may be used for production of methanol, gasoline and diesel fuel, ammonia, and middle distillates.

The synthesis gas may also be used as a source of energy. For example, it may be used as a combustion fuel, to heat the hydrocarbon containing formation or to make steam and then run turbines for the generation of electricity. Synthesis gas may be used to generate electricity by reducing the pressure of the synthesis gas in turbines, or using the temperature of the synthesis gas to make steam and then run turbines. Synthesis gas may also be used in an energy generation unit such as a molten carbonate fuel cell, a solid oxide fuel cell, or other type of fuel cell.

The $H_2$ to CO mole ratio for synthesis gas used as a feed gas for a Fischer-Tropsch reaction is typically about 2:1. The Fischer-Tropsch process typically produces branched and unbranched paraffins, which may be converted by hydrocracking to produce hydrocarbon products which include for example diesel, jet fuel and naphtha products. Examples of methods for conversion of synthesis gas to hydrocarbons in a Fischer-Tropsch process are illustrated in US-A-4096163, US-A-4594468, US-A-6085512 and US-A-6172124.

It may be desirable for the composition of produced synthesis gas, which may be used as a feed gas for a catalytic methanation process, to have a $H_2$ to CO mole ratio of 3:1 to 4:1. Examples of a catalytic methanation process are illustrated in US-A-3992148, US-A-4130575 and US-A-4133825.

Examples of processes for production of methanol from synthesis gas are illustrated in US-A-4407973, US-A-4927857 and US-A-4994093.

Examples of process for producing engine fuels are illustrated in US-A-4076761, US-A-4138442 and US-A-4605680.

The following example illustrates the invention.

Example 1

Various samples of an oil shale deposit at Green River, Colorado, USA, were pyrolysed at various conditions to determine the effects of the pyrolysis temperature and pressure on the quality and the quantity of the produced hydrocarbon fluids.

A stainless steel pressure vessel was configured to hold an oil shale sample. The vessel and flow lines attached to the vessel were wrapped with electric heating tape to provide substantially uniform heating throughout the vessel and the flow lines. The flow lines comprised a backpressure valve for tests at elevated pressures. After passing the valve, the products were cooled at atmospheric pressure in a conventional glass laboratory condenser and analysed.

The test data obtained at 325 degrees Celsius pyrolysis temperature showed the following. At about 0.5 bar hydrogen partial pressure the condensable hydrocarbons produced had an API gravity of about 41°, whereas at about 1.4 bar hydrogen partial pressure this was about 47°. At about 0.5 bar partial pressure the ethylene/ethane ratio was about 0.037, whereas at about 1.4 bar hydrogen partial pressure this was about 0.011. At about 0.5 bar hydrogen partial pressure the H/C ratio of the condensable hydrocarbons was about 1.79, whereas at about 1.4 bar hydrogen partial pressure this was about 1.91. At a pyrolysis temperature of 350 °, the following results were obtained. At about 0.5 bar hydrogen partial pressure the condensable hydrocarbons produced had an API gravity of about 31°, whereas at about 2.3 bar hydrogen partial pressure this was about 42°. At about 0.5 bar hydrogen partial pressure the ethylene/ethane ratio was about 0.081, whereas at about 2.3 bar hydrogen partial pressure this was about 0.007.

At about 0.5 bar hydrogen partial pressure the H/C ratio of the condensable hydrocarbons was about 1.76 whereas at about 2.3 bar hydrogen partial pressure this was about 1.97. Thus by increasing the hydrogen partial pressure, the API gravity is increased, the ethylene/ethane ratio is decreased and the H/C ratio is increased. The test data was also used to determine a pressure/temperature relationship for specific quality and yield aspects of the product by way of equation 1 and the parameters A and B, as outlined hereinbefore. The results show that the by increasing the total fluid pressure the content of hydrocarbons having a carbon number of 25 or more content is decreased, the API gravity is increased, the ethylene/ethane ratio is decreased, the H/C ratio is increased and the yield of hydrocarbons relative to the Fischer Assay is decreased.

**Claims**

1. A method for treating a hydrocarbon containing formation in-situ, which method comprises pyrolysing hydrocarbons present in the formation in the presence of hydrogen, **characterized in that** a partial pressure of hydrogen is at least 0.1 bar and at most 50 bar.

2. A method as claimed in claim 1, wherein the hydrocarbon containing formation comprises a kerogen, such as coal or oil shale, or heavy hydrocarbons, such as a tar sand.

3. A method as claimed in claim 1 or 2, wherein a heat source is applied which is suitable for conductive. heating.

4. A method as claimed in any of claims 1-3, wherein the hydrocarbons present in the formation are pyrolysed by heating at a temperature in the range of from 250 °C to 400 °C, in particular in the range of from 260 °C to 375 °C.

5. A method as claimed in any of claims 1-4, wherein the partial pressure of hydrogen is in the range of from 1 bar and 10 bar, more in particular from 5 bar to 7 bar.

6. A method as claimed in any one of claims 1-5, wherein a pressure/temperature control is applied such that the pressure is at least the pressure which can be calculated for a selected temperature, or the temperature is at most the temperature which can be calculated for a selected pressure from the equation

$$P = 0.07 \cdot e^{\frac{-A}{T+273}+B}$$

wherein P is pressure (bar absolute), T is temperature (°C), and A and B are predetermined parameters which relate to a property which is relevant to the quantity, the composition or the quality of the hydrocarbon fluids produced, in the presence of hydrogen at a selected partial pressure of hydrogen and wherein A may have any value in the range from 14000 up to 60000 and B may have any value in the range from 25 to 90.

7. A method as claimed in claim 6, wherein A equals 14206 and B equals 25.123.

8. A method as claimed in claim 6, wherein the pressure is at most the pressure which can be calculated for a selected temperature, or the temperature is at least the temperature which can be calculated for a selected pressure from the said equation by applying A equals 24146 and B equals to 43.349.

9. A method as claimed in claim 6, wherein A equals 30864 and B equals 50.676.

10. A method as claimed in claim 6, wherein the pressure is at most the pressure which can be calculated for a selected temperature, or the temperature is at least the temperature which can be calculated for a selected pressure from the said equation by applying A equals 16947 and B equals 33.603.

11. A method as claimed in claim 6, wherein A equals 57379 and B equals 83.145.

12. A method as claimed in claim 6, wherein A equals 38360 and B equals 60.531.

13. A method as claimed in claim 6, wherein A equals 28554 and B equals 47.084.

14. The method as claimed in any one of claims 1-13, further comprising the step of subsequently reacting at least part of the treated hydrocarbon containing formation with a synthesis gas generating fluid.

15. A method for producing hydrocarbons comprising providing a synthesis gas which synthesis gas has been produced according to claim 14 and converting the synthesis gas into hydrocarbons.

16. A method as claimed in claim 15, wherein the synthesis gas is converted into paraffins by a Fischer-Tropsch hydrocarbon synthesis process and the paraffins are converted in a hydrocracker.

17. A method of producing energy comprising providing a synthesis gas which synthesis gas has been produced according to claim 14 and expanding and/or combusting the synthesis gas or using the synthesis gas in a fuel cell.

**Patentansprüche**

1. Verfahren zur in situ-Behandlung einer Kohlenwasserstoffe enthaltenden Formation, welches Verfahren ein Pyrolysieren von in der Formation vorliegenden Kohlenwasserstoffen in Gegenwart von Wasserstoff umfaßt, **dadurch gekennzeichnet, daß** ein Partialdruck von Wasserstoff wenigstens 0,1 bar und höchstens 50 bar beträgt.

2. Verfahren nach Anspruch 1, worin die Kohlenwasserstoffe enthaltenden Formation ein Kerogen, wie Kohle oder Ölschiefer, oder schwere Kohlenwasserstoffe, wie einen Teersand umfaßt.

3. Verfahren nach Anspruch 1 oder 2, worin eine Wärmequelle angewendet wird, die für ein Erhitzen durch Wärmeleitung geeignet ist.

4. Verfahren nach einem der Ansprüche 1 bis 3, worin die in der Formation vorliegenden Kohlenwasserstoffe durch Erhitzen auf eine Temperatur im Bereich von 250°C bis 400°C, insbesondere im Bereich von 260°C bis 375°C, pyrolysiert werden.

5. Verfahren nach einem der Ansprüche 1 bis 4, worin der Wasserstoffpartialdruck im Bereich von 1 bar bis 10 bar, spezieller von 5 bar bis 7 bar liegt.

6. Verfahren nach einem der Ansprüche 1 bis 5, worin eine Druck/Temperatur-Regelung derart angewendet wird, daß der Druck zumindest jener Druck ist, der für eine ausgewählte Temperatur berechnet werden kann, oder die Temperatur höchstens jene Temperatur ist, die für einen ausgewählten Druck aus der Gleichung

$$P = 0{,}07 \times e^{\frac{-A}{T+273}+B}$$

berechnet werden kann, worin P der Druck (bar absolut) ist, T die Temperatur (°C) bedeutet und A und B vorbestimmte Parameter sind, die sich auf eine Eigenschaften beziehen, die für die Menge, die Zusammensetzung oder die Qualität der produzierten Kohlenwasserstofffluide relevant ist, in Gegenwart von Wasserstoff bei einem ausgewählten Wasserstoffpartialdruck und worin A eine beliebigen Wert im Bereich von 14.000 bis zu 60.000 annehmen kann und B einen beliebigen Wert im Bereich von 25 bis 90 aufweisen kann.

7. Verfahren nach Anspruch 6, worin A den Wert 14.206 aufweist und B den Wert 25,123 aufweist.

8. Verfahren nach Anspruch 6, worin der Druck höchstens jener Druck ist, der für eine ausgewählte Temperatur berechnet werden kann, oder die Temperatur wenigstens jene Temperatur ist, die für einen ausgewählten Druck aus der genannten Gleichung unter Anwendung von A=24.146 und B=43,349 berechnet werden kann.

9. Verfahren nach Anspruch 6, worin A den Wert 30.864 aufweist und B den Wert 50,676 hat.

10. Verfahren nach Anspruch 6, worin der Druck höchstens jenen Druck annehmen kann, der für eine bestimmte Temperatur berechnet werden kann, oder die Temperatur wenigstens jene Temperatur ist, die aus dieser Gleichung unter Anwendung von A=16.947 und B=33,603 für einen ausgewählten Druck berechnet werden kann.

11. Verfahren nach Anspruch 6, worin A den Wert 57.379 aufweist und B den Wert 83,145 hat.

12. Verfahren nach Anspruch 6, worin A den Wert 38.360 hat und B den Wert 60,531 hat.

13. Verfahren nach Anspruch 6, worin A den Wert 28.554 aufweist und B den Wert 47,084 aufweist.

14. Verfahren nach einem der Ansprüche 1 bis 13, das weiterhin den Schritt eines anschließenden Reagierens wenigstens eines Teiles der behandelten Kohlenwasserstoffe enthaltenden Formation mit einem Synthesegas generierenden Fluid umfaßt.

15. Verfahren zur Herstellung von Kohlenwasserstoffen, das ein Bereitstellen eines Synthesegases, welches Synthesegas gemäß Anspruch 14 hergestellt worden ist, und ein Umwandeln des Synthesegases zu Kohlenwasserstoffen umfaßt.

16. Verfahren nach Anspruch 15, worin das Synthesegas nach einem Fischer-Tropsch-Kohlenwasserstoffsyntheseverfahren zu Paraffinen umgewandelt wird und die Paraffine in einem Hydrocracker umgewandelt werden.

17. Verfahren zur Energiegewinnung, das ein Bereitstellen eines Synthesegases, welches Synthesegas gemäß Anspruch 14 hergestellt worden ist, und ein Expandieren und/oder Verbrennen des Synthesegases oder das Gebrauchen des Synthesegases in einer Brennstoffzelle umfaßt.

**Revendications**

1. Procédé de traitement d'une formation contenant des hydrocarbures in situ, lequel procédé comprend la pyrolyse des hydrocarbures présents dans la formation en présence d'hydrogène, **caractérisé en ce qu'**une pression partielle d'hydrogène est d'au moins 0,1 bar et d'au plus 50 bars.

2. Procédé suivant la revendication 1, dans lequel la formation contenant des hydrocarbures comprend un kérogène, comme du charbon ou du schiste bitumineux, ou des hydrocarbures lourds, tels qu'un sable asphaltique.

3. Procédé suivant l'une ou l'autre des revendications 1 et 2, dans lequel est appliquée une source de chaleur qui convient pour un chauffage par conduction.

4. Procédé suivant l'une quelconque des revendications 1 à 3, dans lequel les hydrocarbures présents dans la formation sont pyrolysés en chauffant à une température allant de 250°C à 400°C, en particulier allant de 260°C à 375°C.

5. Procédé suivant l'une quelconque des revendications 1 à 4, dans lequel la pression partielle d'hydrogène se situe dans la plage de 1 bar à 10 bars, plus particulièrement de 5 bars à 7 bars.

6. Procédé suivant l'une quelconque des revendications 1 à 5, dans lequel est appliqué un contrôle de la pression/température de telle sorte que la pression soit au moins la pression qui peut être calculée pour une température choisie, ou la température soit au plus la température qui peut être calculée pour une pression choisie à partir de l'équation :

$$P = 0{,}07 * e^{\frac{-A}{T+273} + B}$$

dans laquelle P est la pression (bar absolu), T est la température (°C), et A et B sont des paramètres prédéterminés qui ont trait à une propriété qui concerne la quantité, la composition ou la qualité des fluides hydrocarbonés produits, en présence d'hydrogène à une pression partielle d'hydrogène choisie et dans laquelle A peut avoir n'importe quelle valeur allant de 14000 jusqu'à 60000 et B peut avoir n'importe quelle valeur allant de 25 à 90.

7. Procédé suivant la revendication 6, dans lequel A est égal à 14206 et B est égal à 25,123.

8. Procédé suivant la revendication 6, dans lequel la pression est au plus la pression qui peut être calculée pour une température choisie, ou la température est au moins la température qui peut être calculée pour une pression choisie à partir de l'équation précitée en faisant A égal à 24146 et B égal à 43,349.

9. Procédé suivant la revendication 6, dans lequel A est égal à 30864 et B est égal à 50,676.

10. Procédé suivant la revendication 6, dans lequel la pression est au plus la pression qui peut être calculée pour une température choisie, ou la température est au moins la température qui peut être calculée pour une pression choisie à partir de l'équation précitée en faisant A égal à 16947 et B égal à 33,603.

11. Procédé suivant la revendication 6, dans lequel A est égal à 57379 et B est égal à 83,145.

12. Procédé suivant la revendication 6, dans lequel A est égal à 38360 et B est égal à 60,531.

13. Procédé suivant la revendication 6, dans lequel A est égal à 28554 et B est égal à 47,084.

14. Procédé suivant l'une quelconque des revendications 1 à 13, comprenant de plus l'étape de réaction ultérieure d'au moins une partie de la formation contenant des hydrocarbures traitée avec un fluide générateur de gaz de synthèse.

15. Procédé de production d'hydrocarbures comprenant l'apport d'un gaz de synthèse, lequel gaz de synthèse a été produit suivant la revendication 14, et la conversion du gaz de synthèse en hydrocarbures.

16. Procédé suivant la revendication 15, dans lequel le gaz de synthèse est converti en paraffines par un procédé de synthèse d'hydrocarbures de Fischer-Tropsch et les paraffines sont converties dans un hydrocraqueur.

17. Procédé de production d'énergie comprenant l'apport d'un gaz de synthèse, lequel gaz de synthèse a été produit suivant la revendication 14, et l'expansion et/ou la combustion du gaz de synthèse ou l'utilisation du gaz de synthèse dans une pile à combustible.